(19) Europäisches Patentamt / European Patent Office / Office européen des brevets

(11) **EP 1 670 660 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **04790151.7**

(22) Anmeldetag: **06.10.2004**

(51) Int Cl.:
***B60K 23/08*** *(2006.01)*

(86) Internationale Anmeldenummer:
**PCT/EP2004/011167**

(87) Internationale Veröffentlichungsnummer:
**WO 2005/035296 (21.04.2005 Gazette 2005/16)**

(54) **STEUERSYSTEM FÜR EIN ZUMINDEST ZEITWEISE VIERRADGETRIEBENES KRAFTFAHRZEUG**

CONTROL SYSTEM FOR AN AT LEAST TEMPORARILY FOUR-WHEEL DRIVEN MOTOR VEHICLE

SYSTEME DE COMMANDE POUR VEHICULES A MOTRICITE AU MOINS TEMPORAIREMENT INTEGRALE

(84) Benannte Vertragsstaaten:
**AT DE ES FR GB IT**

(30) Priorität: **08.10.2003 DE 10346671**

(43) Veröffentlichungstag der Anmeldung:
**21.06.2006 Patentblatt 2006/25**

(73) Patentinhaber: **Bayerische Motoren Werke Aktiengesellschaft**
**80809 München (DE)**

(72) Erfinder:
• **HOPPER, Thomas**
**80796 München (DE)**
• **BILLIG, Christian**
**80939 München (DE)**

(56) Entgegenhaltungen:
**EP-A- 0 319 830**     **EP-A- 1 203 687**
**EP-A- 1 270 305**     **WO-A- 02/18814**

**Beschreibung**

Die Erfindung bezieht sich auf ein Steuersystem für ein zumindest zeitweise vierradgetriebenes Kraftfahrzeug nach dem Oberbegriff des Patentanspruchs 1.

Derartige Steuersysteme sind beispielsweise in der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Es ist Aufgabe der Erfindung, ein Steuersystem eingangs genannter Art im Hinblick auf die Stellgenauigkeit der Übertragungskupplung zu verbessern.

Diese Aufgabe wird durch die Merkmale des Patentanspruchs 1 gelöst. Vorteilhafte Weiterbildungen sind die Gegenstände der abhängigen Patentansprüche.

Der Erfindung liegt die Erkenntnis zugrunde, dass bei einem neuen System die Kennlinie in der Steuereinheit, durch die einem Soll-Kupplungsmoment ein Verstellweg zugeordnet wird, relativ genau zu einem tatsächlichen Kupplungsmoment führt, das dem Soll-Kupplungsmoment entspricht. Bei einem älteren System könnte derselbe Verstellweg jedoch zu einem tatsächlichen Kupplungsmoment führen, das kleiner als das Soll-Kupplungsmoment ist.

Dies kann erkannt werden, wenn eine Differenz zwischen dem Soll-Kupplungsmoment und dem tatsächlich eingestellten Kupplungsmoment ermittelbar ist. Das Soll-Kupplungsmoment ist bekannt, aber nicht das tatsächlich eingestellte Kupplungsmoment. Das tatsächlich eingestellte Kupplungsmoment soll unter Einsparung zusätzlicher Sensoren erfindungsgemäß möglichst einfach berechnet werden. Die Berechnung erfolgt dabei nur bei einer Betriebsbedingung, insbesondere bei stabil laufenden Rädern, durch die Vereinfachungen in der Berechnung durchführbar sind, da bestimmte unbekannte Größen vernachlässigt werden können.

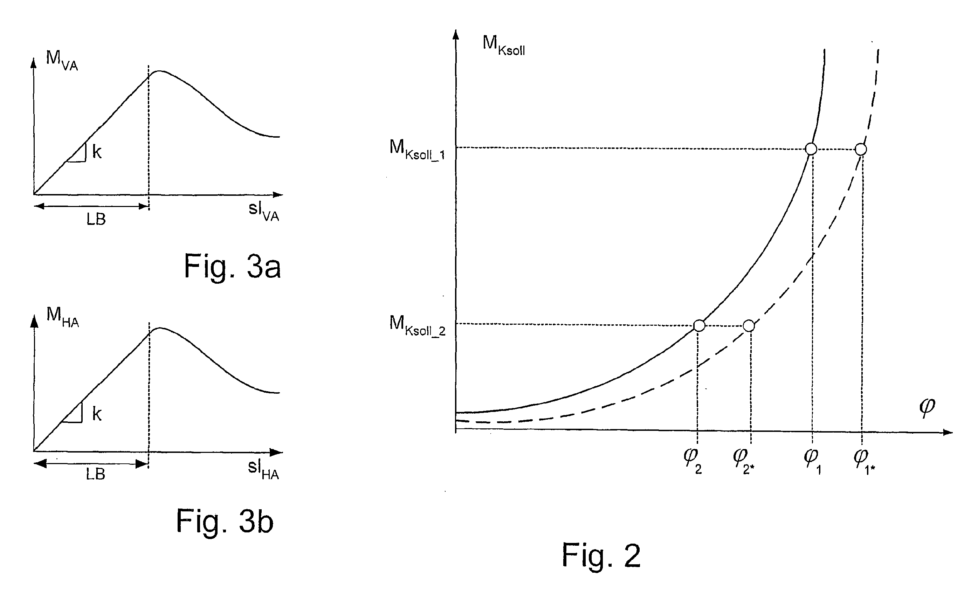

Betrachtet man die bekannten Schlupfkurven für die Vorderachse und für die Hinterachse soll vorzugsweise der lineare Bereich der Schlupfkurve vorliegen, damit ein stabiles Laufen aller Räder ohne Schlupf sichergestellt wird. Anders ausgedrückt sollen gleiche Reifenlängssteifigkeiten (k) an den Rädern der Vorderachse und den Rädern der Hinterachse vorliegen, damit ein möglichst identisches Reifenverhalten an den Rädern der Vorderachse und den der Hinterachse sichergestellt ist (vgl. auch Darstellung bekannter Schlupfkurven in Fig. 3a und Fig. 3b).

Vorzugsweise wird die erfindungsgemäße Überwachung der Stellgenauigkeit der Übertragungskupplung mittels der ohnehin vorhandenen Raddrehzahlsensoren bzw. Radwinkelgeschwindigkeitssensoren durchgeführt. Dabei kann die Genauigkeit der Diagnose erhöht werden, wenn sie bei weiteren Betriebsbedingungen durchgeführt wird, durch die sichergestellt ist, dass möglichst kein Radschlupf entstehen kann außer durch eine Stellungenauigkeit der Übertragungskupplung bzw. deren Aktuator.

Der Vorteil der Erfindung liegt in der Diagnose der Stellgenauigkeit ohne zusätzlicher Sensorik.

In der Zeichnung ist ein Ausführungsbeispiel der Erfindung dargestellt. Es zeigt

Fig. 1    schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb,

Fig. 2    ein Beispiel für eine ursprünglich abgelegte (durchgezogen dargestellte) und eine korrigierte (gestrichelt dargestellte) Kennlinie zur Zuordnung eines vorgegebenen Soll-Kupplungsmoments zu einem Verstellweg des Aktuators,

Fig. 3a    und

Fig. 3b    einen typischen Verlauf sogenannter Schlupfkurven für die Räder der Vorderachse und für die Räder der Hinterachse.

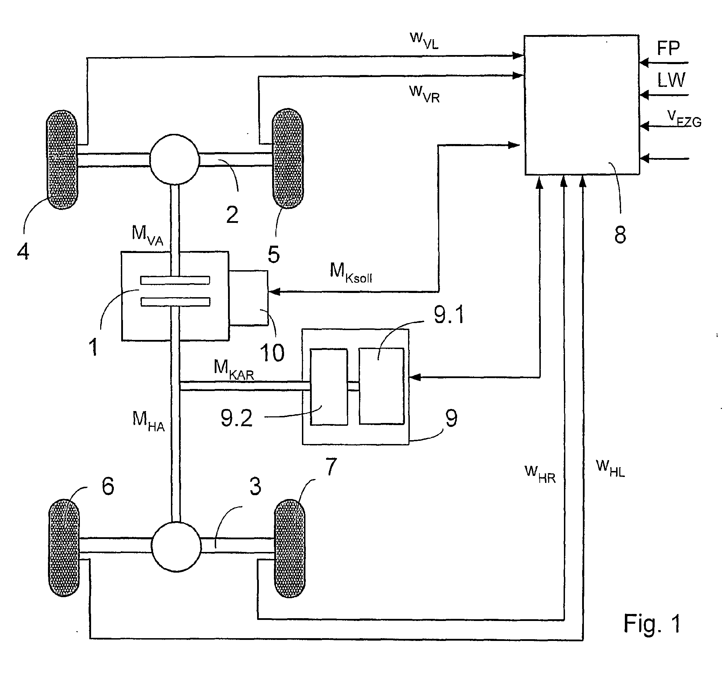

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes Zusatzsteuergerät 10, das beispielsweise das vorgegebene Soll-Kupplungsmoment $M_{Ksoll}$ in einen Strom zur Ansteuerung der Verstelleinheit der Übertragungskupplung 1 umsetzt, enthalten. Dabei wird vorzugsweise eine Kennlinie in der Steuereinheit 8 bzw. im Zusatzsteuergerät 10 (wenn vorhanden) abgespeichert, die einem Soll-Kupplungsmoment $M_{Ksoll}$ einen definierten Verstellweg φ des Aktuators zuordnet (vgl. Fig. 2, durchgezogene Linie).

Bei einem Fahrzeug nach Fig. 1 wird mit offener Übertragungskupplung 1 das gesamte Drehmoment (Gesamt-Antriebsmoment $M_{KAR}$) der Antriebseinheit 9, vorzugsweise bestehend aus einer Brennkraftmaschine 9.1, einem Getriebe 9.2 und mindestens einem Antriebssteuergerät (hier nicht eigens dargestellt), auf die Räder 6 und 7 der Hinterachse 3 übertragen. Hier sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

Zur variablen Drehmomentverteilung bzw. zur Ermittlung eines vorzugebenden Soll-Kupplungsmoments $M_{Ksoll}$ erfasst die Steuereinheit 8 zu weiteren Eingangssignalen hinzu insbesondere die Raddrehzahlen oder Radwinkelgeschwindigkeiten $w_{VL}$, $w_{HL}$, $w_{VR}$, $w_{HR}$ aller Räder 4, 5, 6, 7. Weiterhin erfasst oder ermittelt die Steuereinheit 8 hierzu beispielsweise die Fahrzeuggeschwindigkeit $v_{FZG}$, den Lenkwinkel LW und den Fahrpedalwert FP. Für die erfindungsgemäße Diagnose werden die Winkelgeschwindigkeit der Antriebswelle zur Vorderachse $w_{VA}$ sowie die Winkelgeschwindigkeit der Antriebswelle zur Hinterachse $w_{HA}$ aus den ohnehin erfassten Radwinkelgeschwindigkeiten $w_{VL}$, $w_{HL}$, $w_{VR}$, $w_{HR}$ berechnet. Wird in der Steuereinheit 8 bzw. im Zusatzsteuergerät 10 eine Differenz zwischen den Winkelgeschwindigkeiten $w_{VA}$ und $w_{HA}$, erkannt, liegt ein Schlupfen der Übertragungskupplung 1 vor.

Das Gesamt-Antriebsmoment $M_{KAR}$ wird abhängig vom vorgegebene Soll-Kupplungsmoment $M_{Ksoll}$ bzw. abhängig vom über die Kennlinie in Fig. 2 aus dem Soll-Kupplungsmoment $M_{Ksoll}$ resultierenden eingestellten Verstellweg φ des Aktuators der Übertragungskupplung 1 in ein von der Vorderachse übertragenes Antriebsmoment $M_{VA}$ und in ein von der Hinterachse übertragenes Antriebsmoment $M_{HA}$ aufgeteilt. Das tatsächlich eingestellte Kupplungsmoment $M_{KUPP}$ entspricht im teilgesperrten Zustand dem von der Vorderachse übertragenen Antriebsmoment $M_{VA}$.

Von der Steuereinheit 8; 8, 10 wird erfindungsgemäß bei Vorliegen mindestens einer definierten Betriebsbedingung, durch die stabil laufende Räder sichergestellt sind, ein Verstellweg φ vorgegeben, der gemäß der genannten Kennlinie zu einem nicht voll gesperrten Zustand der Übertragungskupplung 1 führt; d.h. die Übertragungskupplung 1 soll schlupfen. Stabil laufende Räder sind sichergestellt, wenn z. B. gleiche Reifenlängssteifigkeiten k an den Rädern der Vorderachse und den Rädern der Hinterachse vorliegen; d. h. mit Blick auf die Figuren 3a und 3b, dass die erfindungsgemäße Diagnose nur im linearen Bereich LB der Schlupfkurven durchgeführt wird. Anschließend wird von der Steuereinheit das tatsächliche Kupplungsmoment $M_{KUPP}$ nur aus dem Antriebsschlupf $sl_{VA}$ an der Vorderachse, dem Antriebsschlupf $sl_{HA}$ an der Hinterachse und dem Gesamtantriebsmoment $M_{KAR}$ z. B. mittels folgender Formel berechnet:

$$M_{KUPP} = \frac{1}{1 + \dfrac{sl_{HA}}{sl_{VA}}} * M_{KAR}$$

wobei

$M_{KUPP}$    das tatsächlich eingestelltes Kupplungsmoment

$M_{KAR}$    das Eingangsmoment an der Übertragungskupplung bzw. Gesamt-Antriebsmoment

$sl_{VA}$    der Antriebsschlupf an der Vorderachse und

$sl_{HA}$    der Antriebsschlupf an der Hinterachse

sind.

Der Erfindung liegt die Erkenntnis zugrunde, dass bei stabil laufenden Rädern die Konstanten konst zur Berechnung des von der Hinterachse übertragenen Antriebsmoments $M_{HA}$=konst x $sl_{HA}$ und des von der Vorderachse übertragenen Antriebsmoments $M_{VA}$=konst x $sl_{VA}$ vernachlässigt bzw. gekürzt werden können. Der Antriebsschlupf an der Vorderachse $sl_{VA}$ und an der Hinterachse $sl_{HA}$ sind messbar bzw. über die Radwinkelgeschwindigkeiten $w_{VL}$, $w_{HL}$, $w_{VR}$, $w_{HR}$ berechenbar.

Vorzugsweise wird der gemäß der Kennlinie einem teilgesperrten Zustand entsprechende Verstellweg φ bzw. die erfindungsgemäße Schlupfplausibilitätsüberwachung nur bei definierten weiteren Betriebsbedingungen vorgegeben, die insbesondere nicht Ursache für das Auftreten von Schlupf an einem oder mehreren Rädern sein können. Zumindest folgende Betriebsbedingungen sind hierfür besonders vorteilhaft:

- Überschreiten eines vorgegebenen Fahrzeuggeschwindigkeits-Grenzwertes ($v_{FZG}$>$v_{grenz}$) (Hierdurch wird im Wesentlichen ein homogener Reibwert sichergestellt; denn Reibwertunterschiede zwischen den Achsen werden mit steigender Fahrzeuggeschwindigkeit hochfrequenter. Liegen sie über der Eigenfrequenz sind sie für die erfindungsgemäße Schlupfplausibilitätsüberwachung vernachlässigbar.)

- Geradeausfahrt (=> kein kinematischer Schlupf durch Kurvenfahrt)

- Konstantfahrt (=> keine statischen und dynamischen Achlastverlagerungen)

- Fahrt in der Ebene (=> keine statischen und dynamischen Achlastverlagerungen) und/oder

- Vorliegen eines zumindest im Wesentlichen eingeschwungenen Zustands des Systems. (Insbesondere sollten die Gradienten der Radschlüpfe zumindest nahezu Null sein.)

## Patentansprüche

1. Steuersystem für ein zumindest zeitweise vierradgetriebenes Kraftfahrzeug mit einer Steuereinheit (8, 10), mittels der das Antriebsmoment einer Antriebseinheit (9) auf primäre Antriebsräder (6), die permanent mit der Antriebseinheit verbunden sind, und auf sekundäre Antriebsräder (4), die bedarfsweise mit der Antriebseinheit verbindbar sind, variabel verteilbar ist, wobei zur Verteilung des Antriebsmoments ein Kupplungsmoment einer zwischen der Antriebseinheit und den sekundären Antriebsrädern (4) angeordneten Übertragungskupplung (1) mittels der Steuereinheit (8, 10) eingestellt wird, **dadurch gekennzeichnet, dass** die Steuereinheit (8, 10) derart ausgestaltet ist, dass über eine Kennlinie einem Soll-Kupplungsmoment ($M_{Ksoll}$) ein Verstellweg ($\varphi$) für den die Übertragungskupplung betätigenden Aktuator zugeordnet wird und dass von der Steuereinheit bei Vorliegen mindestens einer definierten Betriebsbedingung, durch die stabil laufende Räder sichergestellt sind, ein Verstellwegs ($\varphi$) vorgegeben wird, der gemäß der Kennlinie zu einem nicht voll gesperrten Zustand der Übertragungskupplung (1) führt, und dass anschließend von der Steuereinheit das tatsächliche Kupplungsmoment ($M_{KUPP}$) nur aus dem Antriebsschlupf ($sl_{VA}$) an der Vorderachse, dem Antriebsschlupf ($sl_{HA}$) an der Hinterachse und dem Gesamtantriebsmoment ($M_{KAR}$) berechenbar ist.

2. Steuersystem nach Patentanspruch 1, **dadurch gekennzeichnet, dass** die Kennlinie korrigiert wird, indem jeder einem Soll-Kupplungsmoment zugeordnete Verstellweg proportional zur Abweichung des tatsächlichen Kupplungsmoments vom Soll-Kupplungsmoments verändert abgespeichert wird.

3. Steuersystem nach Patentanspruch 1 oder 2, **dadurch gekennzeichnet, dass** eine Betriebsbedingung das Überschreiten eines vorgegebenen Fahrzeuggeschwindigkeits-Grenzwertes ($v_{FZG} > v_{grenz}$) ist.

4. Steuersystem nach einem der Patentansprüche 1 bis 3, **dadurch gekennzeichnet, dass** eine Betriebsbedingung zumindest im Wesentlichen Geradeausfahrt ist.

5. Steuersystem nach einem der Patentansprüche 1 bis 4, **dadurch gekennzeichnet, dass** eine Betriebsbedingung zumindest im Wesentlichen Konstantfahrt ist.

6. Steuersystem nach einem der Patentansprüche 1 bis 5, **dadurch gekennzeichnet, dass** eine Betriebsbedingung zumindest im Wesentlichen Fahrt in der Ebene ist.

7. Steuersystem nach einem der Patentansprüche 1 bis 6, **dadurch gekennzeichnet, dass** eine Betriebsbedingung das Vorliegen eines zumindest im Wesentlichen eingeschwungenen Zustands des Systems ist.

## Claims

1. A control system for an at least temporarily four wheel-driven motor vehicle with a control unit (8, 10), by means of which the drive torque of a drive unit (9) can be variably distributed to primary drive wheels (6), which are permanently connected to the drive unit and to secondary drive wheels (4), which can be connected if necessary to the drive unit, wherein for distribution of the drive torque, a coupling torque of a transmission clutch (1) arranged between the drive unit and the secondary drive wheels (4) is adjusted by means of the control unit (8, 10), **characterised in that** the control unit (8, 10) is configured in such a way that a displacement path ($\varphi$) for the actuator actuating the transmission clutch is associated via a characteristic line with a desired clutch torque ($M_{Cdesired}$) and **in that** when at least one defined operating condition is present, by means of which stably running wheels are ensured, the control unit predetermines a displacement path ($\varphi$), which results in an incompletely locked state of the transmission clutch (1) in accordance with the characteristic curve, and **in that** the actual clutch torque ($M_{clutch}$) can then only be calculated by the control unit from the drive slip ($sl_{FA}$) at the front axle, the drive slip ($sl_{RA}$) at the rear axle and the total drive torque ($M_{KAR}$).

2. A control system according to claim 1, **characterised in that** the characteristic curve is corrected **in that** each displacement path associated with a desired clutch torque is stored modified proportionally to the deviation of the actual clutch torque from the desired clutch torque.

3. A control system according to claim 1 or 2, **characterised in that** an operating condition is the exceeding of a predetermined vehicle speed limit value ($V_{VEH} > V_{limit}$).

4. A control system according to any one of claims 1 to 3, **characterised in that** an operating condition is at least substantially straight-ahead driving.

5. A control system according to any one of claims 1 to 4, **characterised in that** an operating condition is at least substantially constant driving.

6. A control system according to any one of claims 1 to 5, **characterised in that** an operating condition is at least substantially level driving.

7. A control system according to any one of claims 1 to 6, **characterised in that** an operating condition is the presence of an at least substantially steady-state condition of the system.


## Revendications

1. Système de commande pour un véhicule automobile à motricité au moins temporairement intégrale, comportant une unité de commande (8, 10) permettant de répartir le couple d'entraînement d'une unité d'entraînement (9) de manière variable entre les roues primaires d'entraînement (6) reliées en permanence à l'unité d'entraînement, et les roues secondaires d'entraînement qui peuvent être au besoin reliées à l'unité d'entraînement, l'unité de commande (8, 10) réglant pour cela le couple d'un accouplement de transmission prévu entre les roues secondaires d'entraînement (4) et l'unité d'entraînement, **caractérisé en ce que**

   - l'unité de commande (8, 10) est configurée de manière qu'une courbe caractéristique associe à un couple d'accouplement de consigne ($M_{Kssoll}$), une course de réglage ($\varphi$) d'un actionneur commandant l'accouplement de transmission,
   - l'unité de commande, en présence d'au moins une condition de fonctionnement garantissant que les roues sont en rotation stable, prédéfinit une course de réglage ($\varphi$) qui selon la caractéristique conduit à un état non totalement bloqué de l'accouplement de transmission (1), et
   - à la suite de quoi l'unité de commande peut calculer le couple d'accouplement effectif ($M_{KUPP}$) seulement à partir du glissement d'entraînement ($sl_{VA}$) sur les roues arrière et du couple total d'entraînement ($M_{KAR}$).

2. Système de commande selon la revendication 1, **caractérisé en ce que** la courbe caractéristique est corrigée, avec enregistrement chaque fois d'une course de réglage associée à un couple d'accouplement de consigne modifié proportionnellement à l'écart entre le couple d'accouplement réel et le couple de consigne.

3. Système de commande selon la revendication 1 ou 2, **caractérisé en ce qu'** une condition de fonctionnement est que le dépassement d'une valeur limite de la vitesse du véhicule ($v_{FZG} > v_{greuz}$).

4. Système de commande selon une des revendications 1 à 3, **caractérisé en ce qu'** une condition de fonctionnement est que le véhicule circule au moins à peu près en ligne droite.

5. Système de commande selon une des revendications 1 à 4, **caractérisé en ce qu'** une condition de fonctionnement est que le véhicule circule au moins à une vitesse essentiellement constante.

6. Système de commande selon une des revendications 1 à 5, **caractérisé en ce qu'** une condition de fonctionnement est que le véhicule circule au moins sur une surface essentiellement plane.

7. Système de commande selon une des revendications 1 à 6, **caractérisé en ce qu'** une condition de fonctionnement est que l'état du système ne soit essentiellement pas vibratoire.

Fig. 1

Fig. 2

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10054023 A1